# EUROPEAN PATENT SPECIFICATION

(11) **EP 2 743 028 B1**
(45) Date of publication and mention of the grant of the patent: **08.11.2017**
(21) Application number: 13174476.5
(22) Date of filing: 01.07.2013
(51) Int. Cl.: B23P 15/00, B23P 23/06, B23P 21/00, F01D 5/06, F01D 25/28

(54) **System and method for manufacturing rotors**
System und Verfahren zur Herstellung von Rotoren
Système et procédé de fabrication de rotors

(30) Priority: 17.12.2012 EP 12197518
(43) Date of publication of application: 18.06.2014
(73) Proprietor: General Electric Technology GmbH, 5400 Baden (CH)
(72) Inventor: Wenn, Reiner, 68309 Mannheim (DE)
(74) Representative: General Electric Technology GmbH

(56) References cited:
- WO-A1-2010/106237
- WO-A1-2011/061306
- DE-A1-102007 055 379
- FR-A1- 2 314 996
- US-A- 4 472 783

## Description

### BACKGROUND

### Field of Endeavor

The present disclosure relates to plant setup or system for rotor manufacturing. In particular the present disclosure relates to rotor manufacturing system and rotor manufacturing method according to the preambles of claims 1 and 10 respectively. Such a system and a method are known from U.S. Patent no. 4,086,690.

### Brief Description of the Related Art

Fully loaded manufacturing plants for rotors includes various stations or shops, may be arranged in a single bay or multiple bays in the plant, for performing various operations to obtain the rotors. Such shops or stations may further have various sections to perform designated tasks, which may also be arranged in one or more bays. Further, such plant also includes transportation systems for transporting the rotor parts within the stations and from one station to another station, for enabling the respective operations on the respective stations. Typically, such transportation systems include one or more overhead cranes, which may be capable of such transportation of the rotors or parts thereof across and between the various stations. The overhead cranes utilized as transportation system run on tracks in the bays over the stations, and required to be synchronized in such a manner that the cranes can be made available to all the stations at the required time, which itself is a very tedious and cumbersome task.

Such rotor manufacturing plants are tremendously expensive not only from the standpoint of the initial costs which are encountered in setting up, but also from the standpoint of maintaining thereto. Particularly, the overhead cranes, which not only have very high initial cost, but requires considerable maintenance from time to time, to the extent that at any given time one crane may simply be out of usable condition and in repair. Further, apart from the overhead cranes, the conventional settings in the stations may also be very tedious and cumbersome with regard to changeover, which may require reducing or increasing the number of setups at various stations, depending upon the kind of the rotors to be manufactured. Moreover, of having all such arrangements in the conventional plants, the conventional plants may not be capable of guarantying manufacturing of rotors with accuracy and safety.

While U.S. Patent no. 4,086,690 discusses producing a rotor welded together from discs using trolleys to align rotor disc and roller rests to support the rotor as it is being manufactured, the discussion only concerns the horizontal welding of discs that does not involve tilting.

While previously known plants may have generally been considered satisfactory for their intended purposes, there has remained a need in the art that can be improved to be substantially more manageable in terms of overall cost and time in setting up such plants, convenient and safe in manufacturing various kinds of rotors with ease and rapidity.

### SUMMARY

The present disclosure provides a manufacturing setup or system and method for rotor manufacturing that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

An object of the present disclosure is to describe a manufacturing system or setup and method for manufacturing rotors or parts, which may be substantially more manageable in terms of overall cost and time in setting up such plants. A further aspect is to enable convenient and safe manufacturing atmosphere in such system or setup for manufacturing rotors. A further object of disclosure is to describe the capability of manufacturing system in terms of manufacturing various kind rotors with ease and rapidity. A further object of the present disclosure is to describe the manufacturing system that is capable of eliminating the need of cranes as transportation utility, which are considered to be most expensive item in any conventional rotor manufacturing plants, and providing such a transportation systems that are more manageable in terms of cost, maintenance, overall material requirement for making such transportation system, usability and handling etc. Still a further object of the present disclosure is to describe such a manufacturing plant that is economical to produce and to employ. Yet another object of the present disclosure is to describe to include a provision of transportation in case of failure, or any other natural calamity, such as earthquake, fire etc. Various other aspects and features of the present disclosure will be apparent from the following detailed description and claims.

In one aspect of the present disclosure, a manufacturing system for manufacturing a rotor having various parts thereof is described. The manufacturing system is defined by the features of claim 1. In one embodiment, the welding processing section of the manufacturing system comprises:
at least one testing station configured to perform testing of the rotor or parts thereof for one of more times;
a lathe machining station configured to machine the tested rotor or parts thereof;
a first welding station to stack and perform a first welding operation on the rotor parts, received from the lathe machining station via the work-piece and power shuttles, to obtain the rotor in a vertical orientation; wherein the vertical orientation of the rotor part at the first welding station is converted to the horizontal orientation by the pallet and titling units; and
a second welding station configured to perform a second welding operation on the rotor parts at the horizontal orientation of the rotor part transported by the work-piece and power shuttles from the first welding station.

With regard to this embodiment, for facilitating the rotor or parts thereof to the lathe machining station of the welding processing section, one of the plurality of maneuvering arrangements may also comprise a handling device.

In another embodiment, the welding processing section may further comprise one or more auxiliary stations to perform one or more auxiliary operations on the rotor or parts thereof. The one or more auxiliary stations may be at least one of an X-ray testing station, a buffer station, a cooling station and a furnace station for performing respective operations on the rotor or parts thereof. For transportation of the rotor or parts thereof along the one or more auxiliary stations the pallet unit may be utilized, which is capable transporting the rotor or parts thereof in the vertical orientation thereof along the one or more auxiliary stations.

In one embodiment, the machining processing section of the manufacturing system comprises:
a work-piece bed configured to receive the rotor or parts thereof from the welding processing section via the power shuttle upon being configured on the work-piece shuttle at the at least one transportation-setup station;
a plurality of clamping arrangements configured along the work-piece bed to clamp the rotor or parts thereof; and
at least one automatic controlled machine having integrated tools configured to perform at least one of turning, milling and drilling of the rotor or parts thereof clamped on the work-piece bed.

In another embodiment, the machining processing section may further comprise one or more supplementary arrangements to support one or more operations on the rotor or parts thereof at the work-piece bed.

Further, in another additional embodiment, the plurality of processing sections of the manufacturing system may also comprise a balancing-cum-shipping section configured to receive the rotor or parts thereof from the blading cum clean-room section via the work-piece shuttle and the power shuttle of the least one transportation-setup station to perform one or more related processes including balancing and shipping of the rotor or parts thereof.

In yet another important embodiment, a method of manufacturing the rotor or parts thereof according to the above disclosed manufacturing system is defined by the features of claim 10. These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will better understood with reference to the following detailed description and claims taken in conjunction with the accompanying drawing, wherein like elements are identified with like symbols, and in which:
FIG. 1 illustrates a top view of a system of manufacturing depicting a plurality of processing sections and a plurality of maneuvering sections, for manufacturing rotors or parts thereof, in accordance with an exemplary embodiment of the present disclosure;
FIG. 2 illustrates an enlarged and top view of a welding processing section of the plurality of processing sections of FIG. 1, in accordance with an exemplary embodiment of the present disclosure;
FIGS. 3A(I) and 3A(II) and 3B illustrate side views of various elements of at least one transportation-setup station (a work-piece shuttle and a power shuttle) of one of the plurality of maneuvering arrangements for transportation of the rotors or parts thereof, in accordance with an exemplary embodiment of the present disclosure;
FIG. 4 illustrates an enlarged and top view of a machining processing section of the plurality of processing sections of FIG. 1, in accordance with an exemplary embodiment of the present disclosure;
FIG. 5 illustrates an enlarged and top view of a blading cum clean-room section, for turbine rotors and/ or generator rotors of the plurality of processing sections of FIG. 1, in accordance with an exemplary embodiment of the present disclosure;
FIG. 6 illustrates an enlarged and top view of a balancing-cum-shipping section of the plurality of processing sections of FIG. 1, in accordance with an exemplary embodiment of the present disclosure;
FIGS. 7A to 7F illustrate examples of line diagrams of material flow, such as the rotors or parts thereof, in the manufacturing system of FIG. 1, in accordance with an exemplary embodiment of the present disclosure; and
FIG. 8 illustrates one of the advantages of the manufacturing system, in accordance with an exemplary embodiment of the present disclosure.

Like reference numerals refer to like parts throughout the description of several views of the drawings.

### DETAILED DESCRIPTION OF EXEMPLARY EMBODIMENTS

For a thorough understanding of the present disclosure, reference is to be made to the following detailed description, including the appended claims, in connection with the above-described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and devices are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure. Further, the relative terms, such as "primary," "secondary," "first," "second" and the like, herein do not denote any order, elevation or importance, but rather are used to distinguish one element from another. Further, the terms "a," "an," and "plurality" herein do not denote a limitation of quantity, but rather denote the presence of at least one of the referenced item.

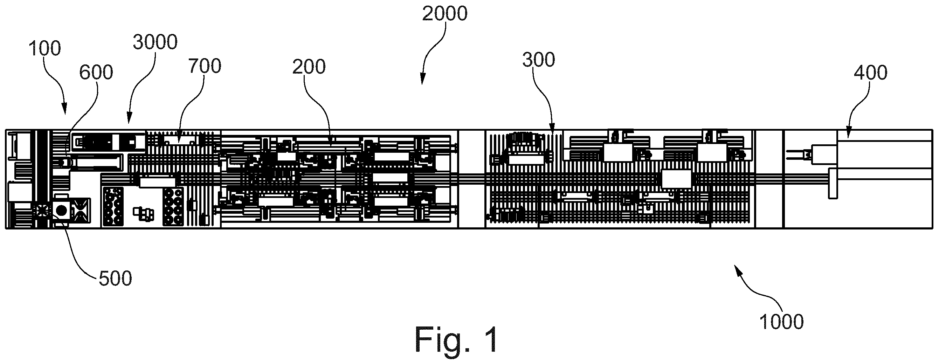

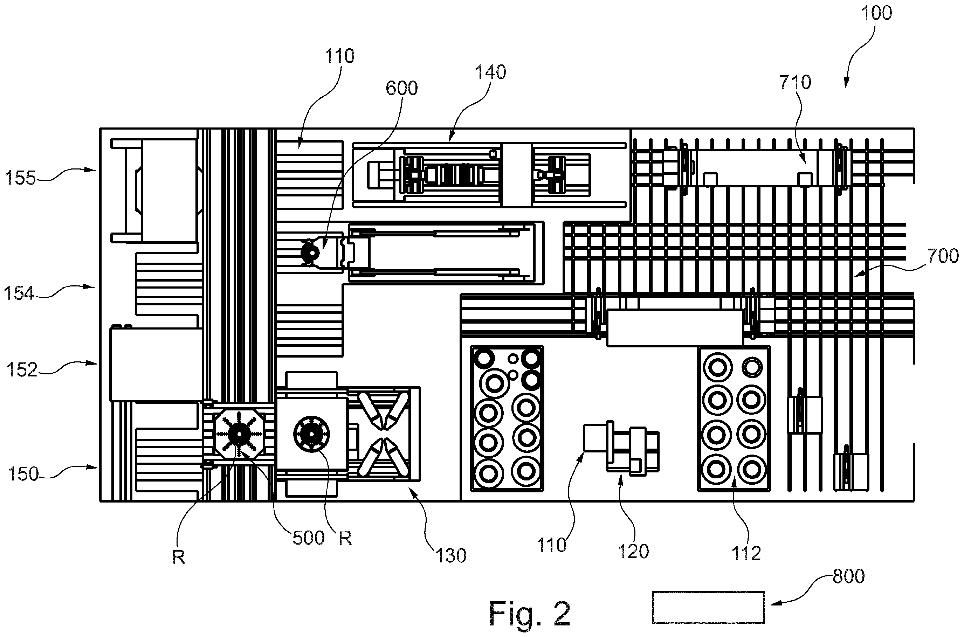

Referring now to FIG. 1, an example of a manufacturing system, which may also be termed as manufacturing plant or setup, 1000 (hereinafter referred to as 'system 1000') for manufacturing a rotor or parts thereof, is illustrated in accordance with an exemplary embodiment of the present disclosure. The system 1000 includes a plurality of processing sections 2000 (hereinafter referred to as 'processing sections 2000') and a plurality of maneuvering arrangements 3000 (hereinafter referred to as 'maneuvering arrangements 3000') configured in conjunction with each other to maneuver the rotor or parts thereof between and across the processing sections 2000 for enabling manufacturing thereof, from raw materials. The processing sections 2000 include a welding processing section 100 (hereinafter referred to as 'welding section 100'), a machining processing section 200 (hereinafter referred to as 'machining section 200'), a blading cum clean-room section 300 and a balancing-cum-shipping section 400 workably configured in sequence in conjunction with each other for manufacturing the rotor or parts thereof. Further, the maneuvering arrangements 3000 include a pallet unit 500, a tilting unit 600, at least one transportation-setup station 700 and a handling device 800 (can be seen in FIG. 2) workably configured to each other and with the processing sections 2000 for transporting or maneuvering the rotor or parts thereof or the raw material for making such rotors or part thereof. The processing sections 2000 and the maneuvering arrangements 3000 are configured or arranged on a portion of land-structure of a factory or plant in one or more rows, configuring one or more bay(s) for the material flow or for commuting rotor or parts thereof.

The term 'rotor or parts thereof' is intended to includes all raw materials to make rotors or parts thereof, or rotor parts, such as discs, shaft-ends, monoblock made from such raw materials, or the rotor/ turbine rotor itself made from assembling all the rotor parts or generator/ rotor generator made from assembling all such parts, and may hereinafter be referred alternatively to as 'rotor,' 'rotor parts,' or 'material,' 'generator,' 'turbine rotor,' or 'rotor generator' as required while describing the system 1000, and may be depicted as 'R' across the various figures herein.

Referring now to FIG. 2, an enlarged and top view of the welding section 100 of the processing sections 2000 is illustrated, in accordance with an exemplary embodiment of the present disclosure, and will be described in conjunction to FIG. 1. The welding section 100 is configured to perform welding and related processes including at least one of testing, stacking, welding preparation, and welding of the raw material to configure the rotor or parts thereof. Without departing from the scope of the present disclosure, the welding section 100 may be capable of including more or less related operation as per the demand and requirement for manufacturing the kind of rotors. Primarily, the welding section 100 includes at least one testing station 110, a lathe machining station 120 ('lathe station 120'), a first welding station 130 and a second welding station 140 workably configured to each other for making the rotor or the rotor parts.

Raw materials for making rotor or parts thereof may be needed to be tested for assuring the quality before performing any processing thereof. For such testing, the at least one testing station 110 may be provided in the welding section 100. In one embodiment, the testing station 110 in the welding section 100 may be two testing stations, as shown in FIG. 2. The testing stations 110, in one embodiment, may be fully facilitated Ultrasonic Testing (UT) stations, without departing the other scope of incorporating other testing capabilities as per the requirement. The testing stations 110 is configured to perform such UT testing of the rotor parts for one or more times, for example, before performing the welding and after performing the welding. Specifically, the rotor parts, such as disc, shaft-ends of the rotors, from the bay(s) are commuted by the handling device 800 on to a material incoming platform 112 ('platform 112') proximate to the testing station 110. Upon reaching the material at the platform 112, the material may be tested or inspected on the testing station 110. Thereafter, the lathe station 120, which may be configured proximate to the testing station 110, is utilized to machine the tested and inspected rotor parts. The testing of the machined rotor part may be further performed on the testing station 110, if desired.

Further, the machined and tested rotor parts are required to move to the next station of the welding section 100, which is the first welding station 130.

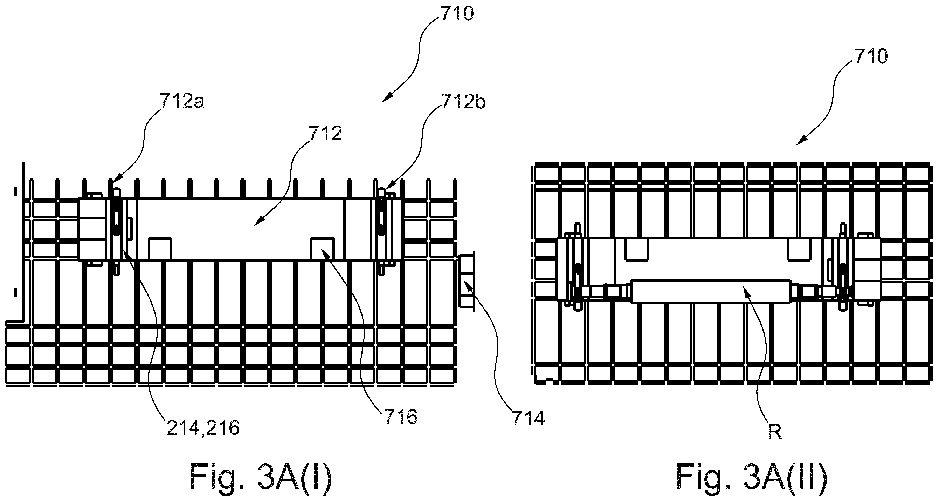

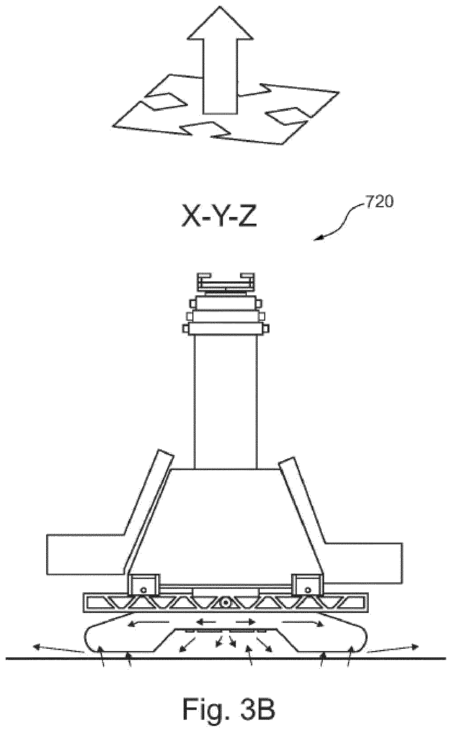

For moving the rotor parts, the maneuvering arrangements 3000 are utilized. Specifically, the at least one transportation-setup station 700 is utilized. The transportation-setup station 700 may be located adjacent to the welding section 100 or between the welding and machining sections 100 and 200, without departing from the scope of being located any other desired location across the setup. The transportation-setup station 700 includes a work-piece shuttle 710 and a power shuttle 720 operatively configured to each other. FIGS. 3A and 3B, respectively, illustrate side views of the work-piece shuttle 710 and the power shuttle 720. The transportation-setup station 700, in accordance with an exemplary embodiment of the present disclosure and will be explained in conjunction to FIGS. 1 and 2. The work-piece shuttle 710 and the power shuttle 720 are configured to move within a particular station or across and between the various stations of the processing sections 2000 for manufacturing of the rotor. Specifically, the work-piece shuttle 710 adapted to receive the rotor or parts 'R' thereof, as shown in FIG. 3A(II). As shown in FIGS. 3A (I and II), in one embodiment, the work-piece shuttle 710 includes a trolley 712 having clamps 712a and 712b at opposite ends thereof. The trolley 712 may adapt any desired length of the rotor parts 'R', and the clamps 712a and 712b clamp the rotor parts on the trolley 712 for delivering the rotor parts to desired stations or sections. The trolley 712 may be with an air cushion or heavy load rollers 714. Further, the work-piece shuttle 710 may include an aggregate module 716 for aggregating the rotor. Further, as shown in FIG. 3B, the power shuttle 720 is operatively coupled to the work-piece shuttle 710 to maneuver thereto for transporting the rotor or parts thereof 'R' clamped thereon, between and across the processing sections 2000 for manufacturing of the rotor. The power shuttle 720 is capable of maneuvering the rotor parts 'R' linearly, horizontally, side by side and vertically, i.e. in (X, Y, Z) coordinates.

Referring again to FIG. 2, the combination of the work-piece and power shuttles 710, 720 maneuvers the rotor parts from the lathe station 120 to the first welding station 130, where rotor parts are stacked together and heated, after which a first welding operation is performed to obtain the rotor in a vertical orientation. The first welding operation, without any limitation, may be a Tungsten Inert Gas (TIG) welding. The first welding station 130 is fully facilitated station for performing TIG welding. Upon the first welding operation on the first welding station 130, a second welding operation may be performed at the second welding station 140. For the second welding operation, the rotor part (particularly, a rotor post) may be required to have a horizontal orientation, as against the vertical orientation during the first welding operation.

The vertical orientation of the rotor part, at the first welding station 130, is converted to the horizontal orientation at the second welding station 140, with the combined help of the pallet unit 500 and the tilting unit 600. The pallet and tilting units 500, 600 may be located at the welding section 100, without departing from the scope of being located at any other desired location across the setup or system 1000. The pallet unit 500 is configured to maneuver the rotor or its part along a portion welding section 100. Further, the tilting unit 600 is configured to maneuver the rotor or its part for tilting the orientation. The rotor or its parts, from the first welding station 130, is moved to the tilting unit 600 by the pallet unit 500, where the vertical orientation is oriented to the horizontal orientation.

The rotor part in the horizontal orientation is transported to the second welding station 140 by utilizing the work-piece shuttle 710 and the power shuttle 720. At the second welding station 140 the second welding operation on the horizontal rotor is performed. The second welding operation, without any limitation, may be a Submerged Arc Welding. The second welding station 140 may be a fully facilitated station for performing the Submerged Arc Welding. After such welding, the welded rotor may further undergo UT testing at the testing station 110, adjacent to the second welding station 140. After completion of the such testing, the rotor from the second welding station 140 may be transported to the tilting unit 600 by utilizing the work-piece shuttle 710 and the power shuttle 720 to further change its orientation from the horizontal to vertical. The rotor in the vertical orientation may undergo further other related operations thereon as per the requirements. In such operations, the rotor is carried on the pallet unit 500 and is hosted for performing various operations (termed as 'auxiliary operations').

For such operations, the welding section 100 may include one or more auxiliary stations to perform one or more auxiliary operations on the rotor. Such auxiliary stations may be at least one of an X-ray testing station 150, a buffer station 152, a cooling station 154, and a furnace station 155 for performing respective operations on the rotor, as per the process requirement and as known in the art. For example, before performing the first welding operation of the stacked rotor parts at the first welding station 130, the stacked rotor parts may be heated. For such heating the furnace station 155 may be utilized. In another example, the cooling station 154 may be utilized for cooling the rotor part upon the process requirement. Similarly, the buffer station 152 may be utilized for maintaining the inventory, and the X-ray testing station 150 may be required for testing quality assurance. For the sake of brevity, such detailed explanations are excluded. After all such operations in the welding section 100; the rotor (assembled and welded) orientation's is further oriented to the horizontal from the vertical by the tilting unit 600, and thereafter is adapted to be moved to the next section, i.e. the machining section 200, by utilizing the work-piece shuttle 710 and the power shuttle 720.

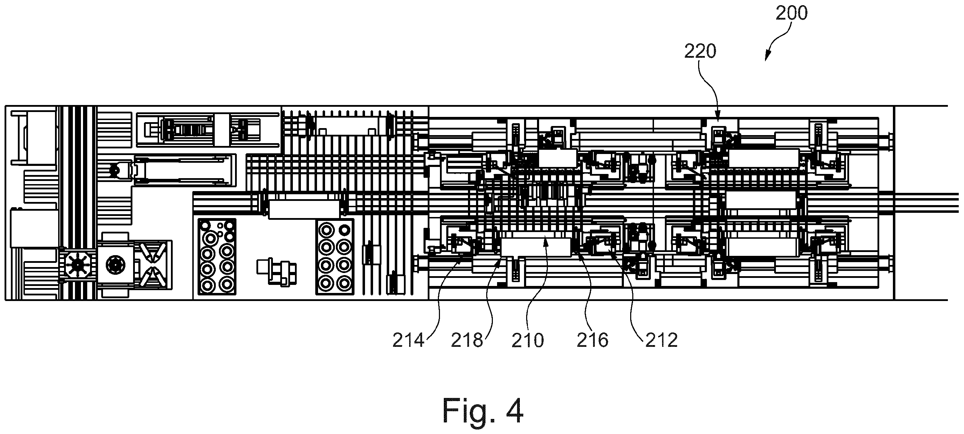

Referring now to FIG. 4, the enlarged and top view of the machining section 200 is illustrated, in accordance with an exemplary embodiment of the present disclosure. Herein reference of previous FIGS. 1 to 3B will be made in order to describe processes of the machining section 200. In an example, the machining section 200 includes a work-piece bed 210, a plurality of clamping arrangements, such as spindle stocks 212, 214 and steady rests 216, 218, and at least one automatic controlled machine 220 (machine 220) workably configured together to perform the plurality of machining operations, such as turning, milling, drilling and the like on the rotor.

The present disclosure envisages to align the rotor on the work-piece bed 210 with two fully automatic controlled machine, such as the machine 220, of a size that may be fully accommodated by the clamping arrangements, such as the spindle stocks 212, 214 and the steady rests 216, 218. The rotor may be adapted to rest on the work-piece bed 210 in a clamped position via the clamping arrangements 212, 214; 216, 218 for undergoing various processes via the machine 220, as per the requirement of the process, inside and outside of a chipping area of the machining section 200. In one embodiment, the work-piece bed 210 is configured to receive the rotor from the welding section 100 via the work-piece shuttle 710 and the power shuttle 720. Further the clamping arrangements 212, 214; 216, 218 configured along the work-piece bed 210 clamps the rotor for undergoing various process under the machine 220.

As an example, work performed at the machine section 200 in conjunction with the work-piece bed 210, the clamping arrangements, such as the spindle stocks 212, 214 and steady rests 216, 218, and the machine 220 may be understood herein. Firstly, the rotor may be clamped on the work-piece bed 210 via the spindle stock 212 and the steady rest 218 to enable turning and machining processes for a first bearing thereon. A second bearing and coupling with a coupling flange may be clamped in the spindle stock 214 and steady rest 216. Depending upon the type of the rotor to be manufactured, slots and other parts are made by turning process. Mounts, coupling flange and other design elements may be clamped on the spindle stock 212 and the steady rest 218. Further, drilling operation may be performed on the machine 220, wherein drilling of a first coupling flange with auxiliary head on the spindle stock 214 may be configured. Further, drilling of a second coupling flange with an auxiliary head on the spindle stock 212 may be configured; herein the rotor may be clamped on the spindle stock 214 and steady rest 216. Depending on the type of rotor all balancing holes and fir tree grooves or other design elements may be drilled and milled; herein the rotor may be clamped in the spindle stock 212 and steady rest 218. After all these steps a run-out may be performed, wherein the rotor may be clamped in the steady rest 216 and 218 driven by a shaft of the spindle stock 212 or 214.

The machining section 200 further includes one or more supplementary arrangements (not shown) to support one or more supporting operations on the rotor at the work-piece bed 210. In an example, the supplementary arrangements may include various laser as well as sensor devices that may be capable of enabling an automatic adjustment of the rotor in connection with the related software and hardware, and with the machines at the machining section 200. In another example, other supplementary arrangement may include various set-ups and instrumentations at the machining section 200 to measure and adjust the machine 220 automatically. As also mentioned herein above, various clamping arrangements 212, 214; 216, 218 also includes various supplementary arrangements, such as the auxiliary heads, the drive shafts etc. for enabling various processes of the different technologies for turning, drilling and milling operations on both turbine rotors and generators at the machining section 200. All these combined features of the machining section 200 in combination of the welding section and other sections, such as the blading cum clean-room section 300 and the balancing-cum-shipping section 400 make the system 1000, a mixed model production system capable of manufacturing any desired kind of rotors as per the need and requirement, eliminating a need to have conventional systems where different set-ups are required to manufacture different kinds of rotors.

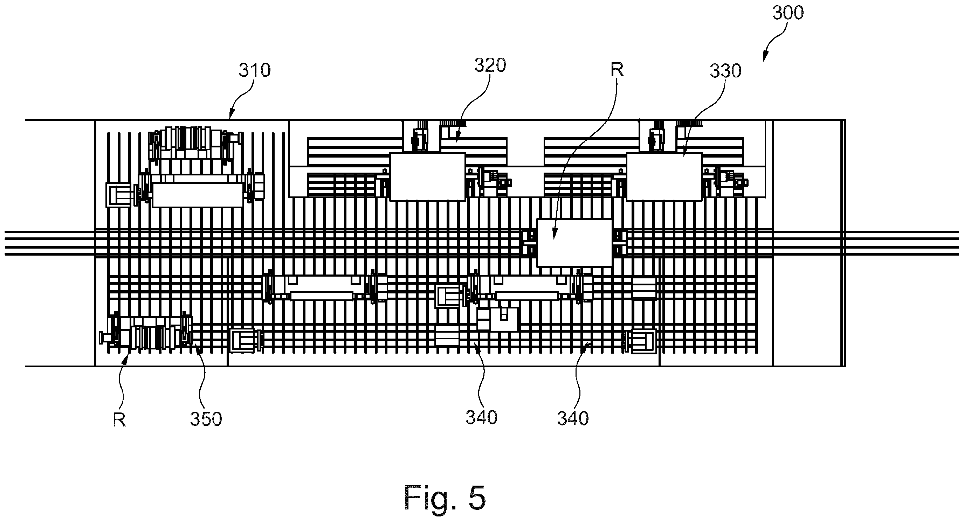

Referring now to FIG. 5, an enlarged and top view of the blading cum clean-room section 300 of the processing sections 2000 of FIG. 1 is illustrated, in accordance with an exemplary embodiment of the present disclosure, and will be explained in conjunction with FIGS. 1 to 4. After performing run-out in the machining section 200, the rotor is moved to the blading cum clean-room section 300 via the work-piece shuttle 710. At the blading cum clean-room section 300 various rotor manufacturing processes may be performed, including but not limited to, at least one of washing, deburring and blading of the rotor. For enabling such operations, in an example, the blading cum clean-room section 300 may include, without any limitation, a washing or deburring area 310; various blading areas 320, 330; and a clean-room area 340. In an embodiment, the blading area 320 may be designed to be fully suitable for Reaction Turbine Blading (RTB) (hereinafter 'RTB area 320') processes, and the blading area 330 may be designed to be fully suitable for Impulsive Turbine Blading (ITB) (hereinafter 'ITB area 330') processes. After receiving the rotor from the machining section 200, the rotor may be send to the washing or deburring area 310 for washing and deburring. In one form, washing and deburring may be a manual process, however, in another form it may be an automatic process. Further, on the completion of the washing process of the rotor, depending upon the type of rotor, the rotor may be moved to the at least one blading areas, such as the RTB area 320, the ITB area 330, or to the clean-room area 340.

For example, if the rotor is moved to the RTB area 320, various processes are performed for manufacturing the reaction turbine, such as assembling of sealing strips and turning. Further, if the rotor is moved to the ITB area 330, various processes are performed for manufacturing the impulse turbine, such as, drilling of pin holes in the disc of the rotor after the blades are assembled. In further steps at the ITB area 330, a hole is drilled through the blades and the disk, after which the disc and the blade are reamed together. In a further step, at the ITB area 330, the pins are assembled and pressed-in the concentric holes of the blades and the disk of the rotors. In any circumstances, if at all required to change the orientation of the rotor from horizontal to vertical, the rotor may be moved to the tilting unit 600 via the work-piece shuttle 710 and the power shuttle 720. For generator manufacturing, the rotor may be moved to the clean-room area 340 for assembling and securing to bars thereto, and transported outside the clean-room area 340 by the power shuttle 720 for assembling retaining rings thereto.

The blading cum clean-room section 300 may also include a plurality of supporting areas 350, such as a buffer area to maintain rotor buffer, a mobile unit at around the clean-room area 340 for machining and related operations on the rotor. Upon the completion of all the respective processes depending upon the kind of rotors or generator, the rotors or generator may be transported to the balancing-cum-shipping section 400.

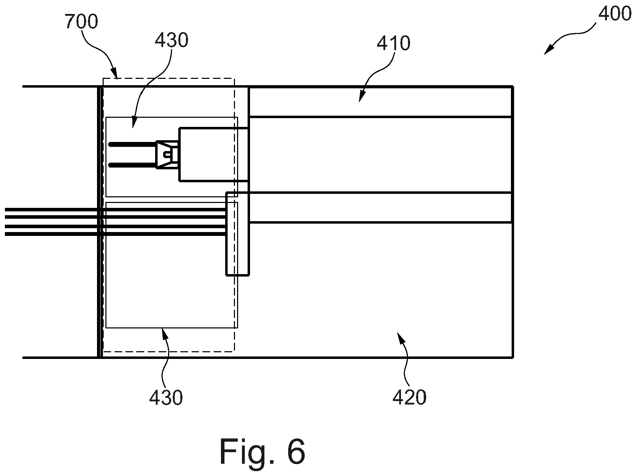

FIG. 6 illustrates an enlarged and top view of the balancing-cum-shipping section 400, in accordance with an exemplary embodiment of the present disclosure, and will be explained herein in conjunction to FIGS. 1 to 5. The balancing-cum-shipping section 400 is configured to receive the rotor or generator from the blading cum clean-room section 300 via the work-piece shuttle 710 and the power shuttle 720 to perform related processes including at least one of balancing and shipping thereof. For balancing and shipping, the balancing-cum-shipping section 400 includes a balancing area 410 and a shipping area 420. The balancing-cum-shipping section 400 further includes a loading-unloading area 430, which may have the maneuvering arrangements 3000, specifically the transportation-setup station 700 including the work-piece shuttle 710 and the power shuttle 720. The loading-unloading area 430 may enable loading and unloading of the rotors or generators. Upon the balancing of the rotor or generator, run-out may also be done at the balancing area 410, after which the rotor or generator may be transported to the shipping area. In one form, the rotor or generator may also undergo cleaning/washing before transportion to the shipping area 420. The balancing area 410 and the shipping area 420 may be a fully facilitated area for performing all the related processes on the rotors or generators. The rotors, such as the turbine rotors or the generators, such as the generator rotors, are now ready for shipping.

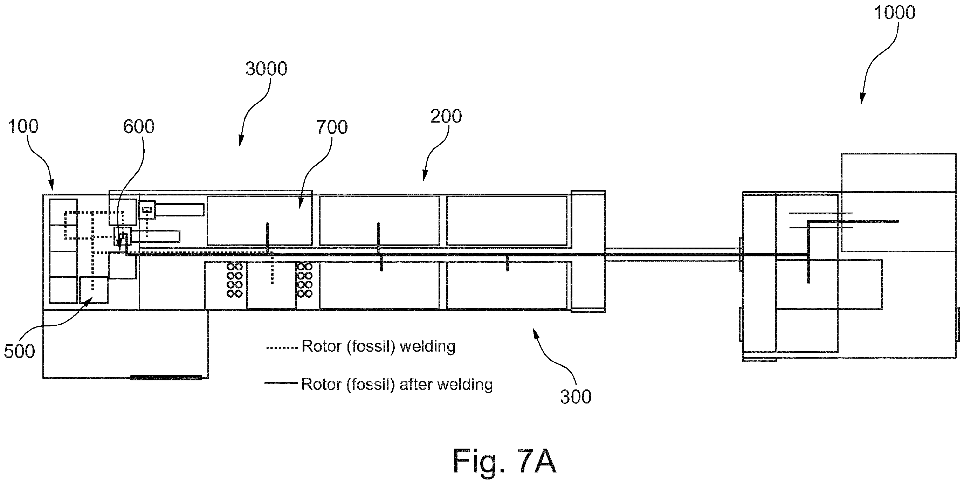

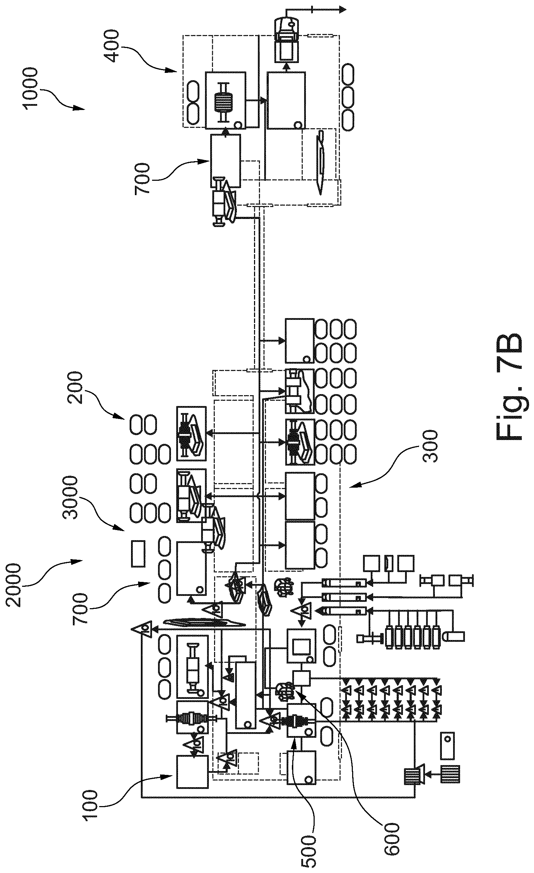

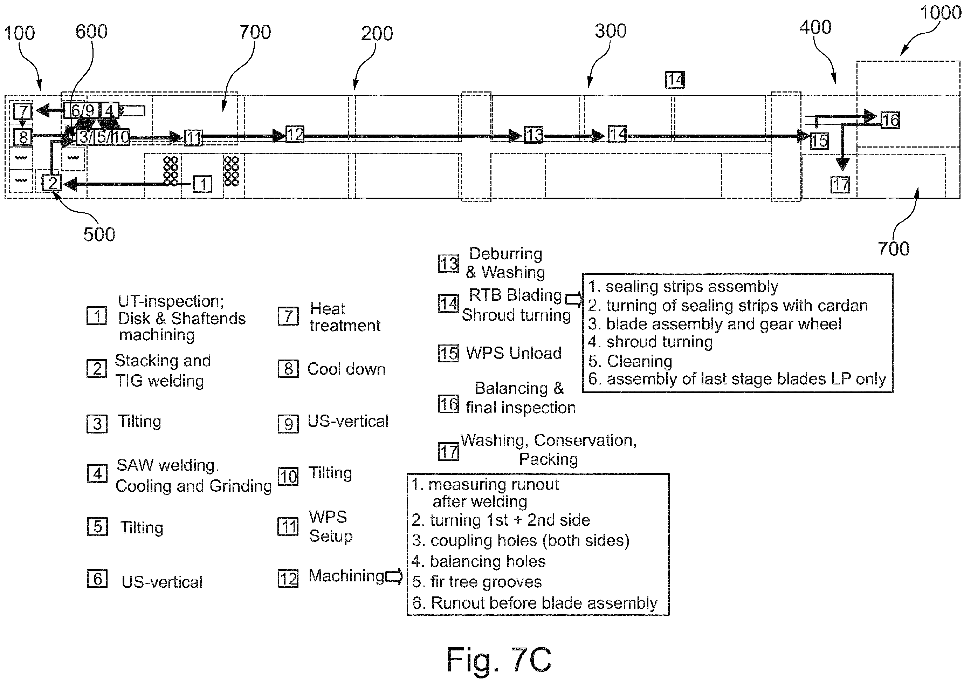

Herein various examples of the material flow, such as the turbine rotors, the generator rotors or the parts thereof, as explained in FIGS. 1 to 6 in conjunction with various sections, such as sections 100, 200, 300, 400, and various maneuvering arrangements, such as 500, 600, 700 and 800, are depicted in FIGS. 7A to 7F, in accordance with various exemplary embodiments of the present disclosure, and may be understood from the above explanation. For example, FIG. 7A illustrates the depiction of an exemplary standard spaghetti flow. FIG. 7B illustrates a depiction of an exemplary standard simulation flow. FIG. 7C illustrates the depiction of an exemplary fossil rotor flow. In FIG. 7C, the raw material for making the rotor or the rotor parts are maneuvered for various operations to various sections as described. For example, flow begins from 1 and being in subsequent order from 2 to 17. Respective operations in order of sequence are performed at respective stations. at 1, Ultra sonic inspection, Disk and shaft ends machining; at 2, stacking and TIG welding; at 3, tilting; at 4, SAW welding, cooling and grinding; at 5, tilting; at 6 vertical alignment; at 7 heat treatment; at 8, cooling down; at 9, vertical alignment; at 10, tilting; at 11, on the transportation-setup station 700 for being transported; at 12 for machining, such as measuring run out after wielding, turning sides of rotor/rotor parts, coupling holes, balancing holes, fir tree grooves, run out before blades assembly; at 13, deburring and washing; at 14, blading and shroud turning, such as sealing strips assembly, turning of sealing strips with cardan, blade assembly and gear wheel, shroud turning, cleaning, assembly of last stages rotor components, last stage rotor blades; at 15,unloading; at 16, balancing and final inspection; at 17, washing, conservation packing.

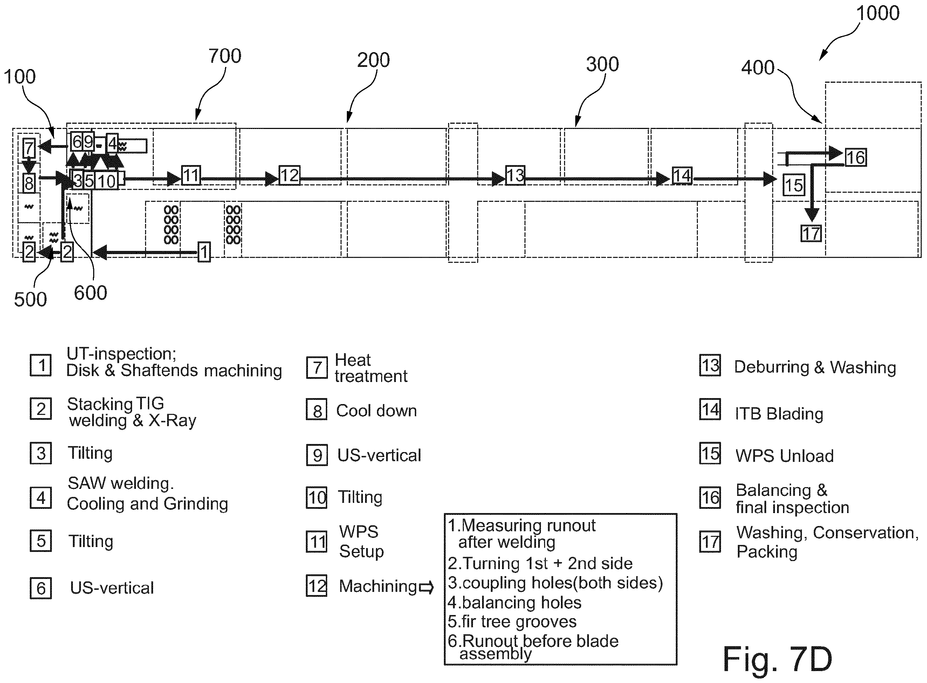

Further examples of material flow are depicted in FIG. 7D to 7F. FIG. 7D illustrates a depiction of an exemplary nuclear rotor flow. In FIG. 7D, similar to 7C, the raw material for making the rotor or the rotor parts are maneuvered for various operations to various sections as described. For example, flow begins from 1 and being in subsequent order from 2 to 17. Respective operations in order of sequence are performed at respective stations: at 1, Ultra sonic inspection, Disk and shaft ends machining; at 2, stacking, TIG welding and X-rays; at 3, tilting; at 4, SAW welding, cooling and grinding; at 5, tilting; at 6 vertical alignment; at 7 heat treatment; at 8, cooling down; at 9, vertical alignment; at 10, tilting; at 11, on the transportation-setup station 700 for being transported; at 12 for machining, such as measuring run out after wielding, turning sides of rotor/rotor parts, coupling holes, balancing holes, fir tree grooves, run out before blades assembly; at 13, deburring and washing; at 14, blading; at 15,unloading; at 16, balancing and final inspection; at 17, washing, conservation packing.

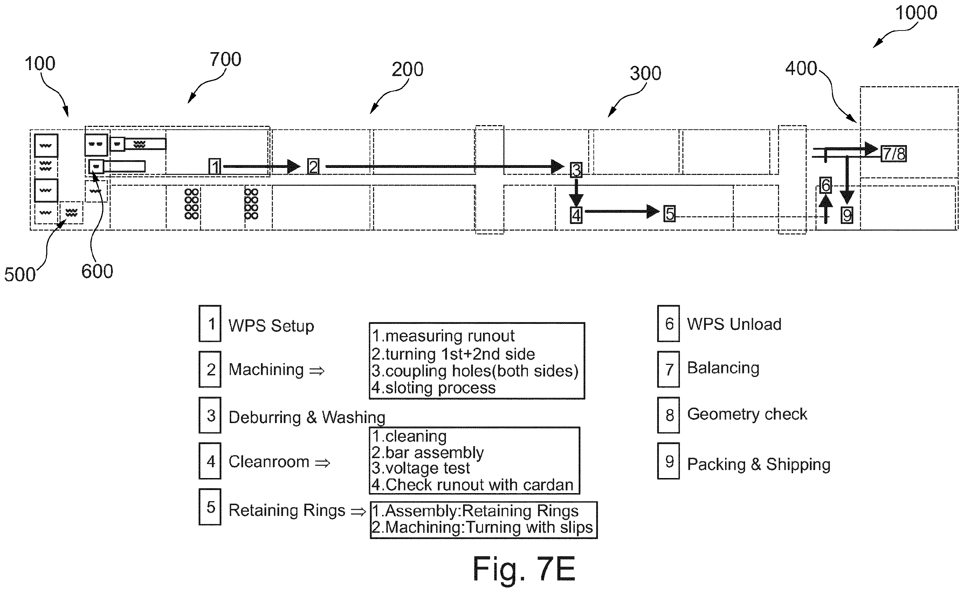

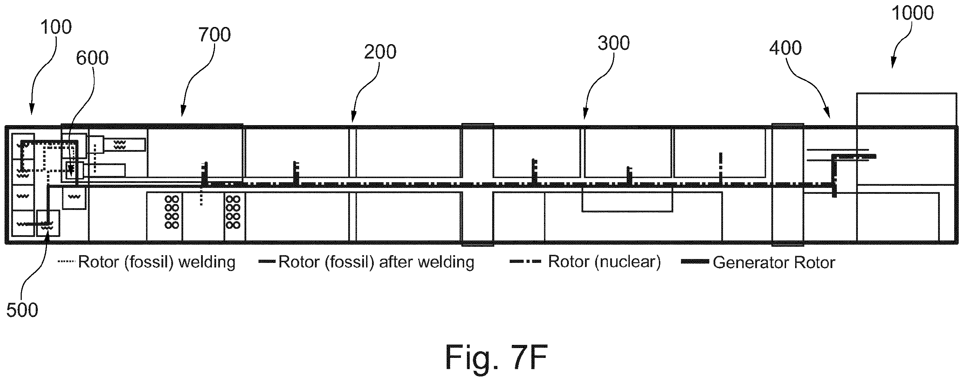

FIG. 7E illustrates a depiction of an exemplary generator flow. In FIG. 7E, similar to 7C and 7D, the raw material for making the rotor or the rotor parts are maneuvered for various operations to various sections as described. For example, flow begins from 1 and continues in subsequent order from 2 to 9. Respective operations in order of sequence are performed at respective stations: at 1, on the transportation-setup station 700 for being transported; at 2, machining, such as measuring run out, turning, coupling holes, slotting; at 3, deburring and washing; at 4, for various operations, such as cleaning, bar assembly, voltage test, check run out with cardan; at 5, retaining rings, such as assembly of retaining rings, machining: turning with slips; at 6 unloading; at 7, balancing; at 8, geometry check; at 9 packing and shipping. FIG. 7F illustrates a depiction of an exemplary combined fossil (welding and after welding), nuclear and generator flow. It is evident from the said figures that any combination of the sections 2000 or the maneuvering arrangements 3000 in any desired numbers thereof are possible for making the system 1000 suitable for making any kind of rotor or generators and the like. The present disclosure aims to cover any such minor or major modifications in the system 1000 within its scope. Herein for the sake of brevity, the detailed explanations thereof have been excluded.

The present disclosure also describes a method of manufacturing the rotors, the generators or the parts thereof by utilizing the system 1000. The method for such manufacturing may be better derived from the above explanations of the system 1000, and accordingly, has been excluded herein to avoid repetition and redundancy and to maintain the brevity of the disclosure.

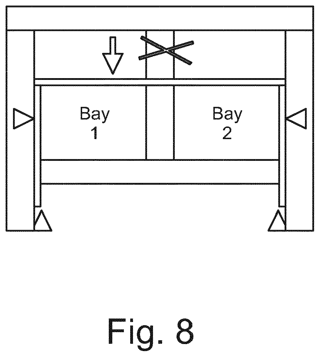

A system of the present disclosure is advantageous in various scopes. The system is a mixed model manufacturing line modulated in a manner to incorporate the capability of making any kind of rotors or generators. The system may also incorporate all kinds of processes for manufacturing all types of rotors or generators, which include machining and material testing of the blanks disk and shaft ends of rotors, joining of disk and shaft ends, welding of rotors, weld inspection heat treatment, mechanical machining, assembling, balancing, washing, cleaning and preserving etc. The present system is advantageous in eliminating the need for cranes as transportation utility, which are considered to be the most expensive item in any conventional rotor manufacturing plants, and providing such transportation systems that are more manageable in terms of cost, maintenance, overall material requirement for making such transportation systems, usability and handling etc. Exclusion of the cranes by the various maneuvering arrangements are advantageous in many ways, including but not limited to, reduced overall height of a factory structure of the system, as can be seen in FIG. 8 (actual area of the present factory structure may be depicted by dark shadings), overall costing of the making such factories reduced, overall installing time of such factories is also reduced and etc. The present system is also advantageous in terms of the transportation system having capability to withstand failure, or any other natural calamity, such as earthquake, fire etc.

Further, the characteristics of the various maneuvering arrangements are that the components of rotor or generators, or rotor or generator itself with a weight of up to 350 tons are moved and transported easily and conveniently while maintaining the safety essentials. Furthermore, such maneuvering arrangements are advantageous in allowing bays in the factory in lightweight construction and significantly reduced bay volume. Moreover, due to the consistently complete machining of each module a drastic reduction in transport may be achieveable. The welding and machining sections of the present system may have reduced numbers of machine types, as against conventional factories, and still include flexibility of manufacturing various rotor on one type of machine. Moreover, apart for the aforementioned advantages, such construction method or sequences, the system includes various other advantages of today's plants and methods.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omission and substitutions of equivalents are contemplated as circumstance may suggest or render expedient, but such are intended to cover the application or implementation whithin the scope of the claims of the present disclosure.

### Reference Numeral List

- 1000: Manufacturing system, system
- 2000: Processing sections
- 100: Welding processing section; welding section
- 110: Testing station
- 112: Platform
- 120: Lathe machining station; Lathe station
- 130: First welding station
- 140: Second welding station
- 150: X-ray testing station
- 152: Buffer station
- 154: Cooling station
- 155: Furnace station (Collectively 150-154 referred to as 'Auxiliary stations')
- 200: Machining processing section; machining section
- 210: Work-piece bed
- 212, 214: Spindle stocks, Clamping arrangements
- 216, 218: Steady rests (Collectively 212-218 referred to as 'Clamping arrangements')
- 220: Automatic controlled machine
- 300: Blading cum clean-room section
- 310: Washing or deburring area
- 320, 330: Blading areas (RTB area 320; ITB area 330)
- 340: Clean-room area
- 350: Supporting area
- 400: Balancing-cum-shipping section
- 410: Balancing area
- 420: Shipping area
- 430: Loading, unloading area
- 3000: Maneuvering arrangements
- 500: Pallet unit
- 600: Tilting unit
- 700: Transportation-setup station
- 710: Work-piece shuttle
- 712: Trolley
- 712a, 712b: Clamps
- 714: Heavy load rollers
- 716: Aggregate module
- 720: Power shuttle
- 800: Handling device
- 'R': Rotor, Generator; parts thereof; material

## Claims

1. A manufacturing system (1000) for manufacturing a rotor, having various parts thereof, the manufacturing system (1000) comprising:
a plurality of processing sections (2000) configured to process the rotor or parts thereof, the plurality of processing sections (2000) comprising:
a welding processing section (100) configured to perform welding and one or more related processes including at least one of testing, stacking, welding preparation, and welding of the rotor or parts thereof;
a machining processing section (200) configured to receive the rotor or parts thereof to perform machining and one or more related processes including at least one of turning, milling and drilling thereof; and
a plurality of maneuvering arrangements (3000) configured to maneuver the rotor or parts thereof between and across the plurality of processing sections (2000), the plurality of maneuvering arrangements (3000) comprising:
a pallet unit (500) configured in the welding processing section (100) to maneuver the rotor or parts thereof along a portion of the welding processing section (100);
a tilting unit (600) configured in the welding processing section (100) to maneuver the rotor or parts thereof, received from the pallet unit (500), to tilt an orientation thereof; and
at least one transportation-setup station (700) to transport the rotor or parts thereof, each of the at least one transportation-setup station (700) comprising:
a work-piece shuttle (710) adapted to receive the rotor or parts thereof; and
a power shuttle (720) operatively coupled to the work-piece shuttle (710) to maneuver the work-piece shuttle (710) for transporting the rotor or parts thereof between and across the plurality of processing sections (2000) for manufacturing of the rotor,
**characterised by** the plurality of processing sections (2000) further comprising a blading cum clean-room section (300) configured to receive the rotor or parts thereof from the machining processing section (200) via the work-piece shuttle (710) of the at least one transportation-setup station (700) to perform one or more related processes including washing, deburring and blading of the rotor or parts thereof.

2. The manufacturing system (1000) as claimed in claim 1, wherein the welding processing section (100) comprises:
at least one testing station (110) configured to perform testing of the rotor or parts thereof for one of more times;
a lathe machining station (120) configured to machine the tested rotor or parts thereof;
a first welding station (130) to stack and perform a first welding operation on the rotor parts, received from the lathe machining station (120) via the work-piece and power shuttles (710, 720), to obtain the rotor in a vertical orientation; wherein the vertical orientation of the rotor part at the first welding station (130) is converted to the horizontal orientation by the pallet and tilting units (500, 600); and
a second welding station (140) configured to perform a second welding operation on the rotor parts at the horizontal orientation of the rotor part transported by the work-piece and power shuttles (710, 720) from the first welding station (130).

3. The manufacturing system (1000) as claimed in claim 2, wherein the welding processing section (100) further comprises:
one or more auxiliary stations (150-154) to perform one or more auxiliary operations on the rotor or parts thereof, wherein the one or more auxiliary stations (150-154) is at least one of an X-ray testing station (150), a buffer station (152), a cooling station (154) and a furnace station (155) for performing respective operations on the rotor or parts thereof, wherein the rotor or parts thereof are transported along the one or more auxiliary stations (150-154) by the pallet unit (500) in the vertical orientation thereof.

4. The manufacturing system (1000) as claimed in claim 2, wherein the plurality of maneuvering arrangements (3000) comprises a handling device (800) for handling the rotor or parts thereof to the lathe machining station (120) at the welding processing section (100).

5. The manufacturing system (1000) as claimed in claim 1, wherein the machining processing section (200) comprises:
a work-piece bed (210) configured to receive the rotor or parts thereof from the welding processing section (100) via the power shuttle (720) upon being configured on the work-piece shuttle (710) at the at least one transportation-setup station (700);
a plurality of clamping arrangements (212-218) configured along the work-piece bed to clamp the rotor or parts thereof; and
at least one automatic controlled machine (220) having integrated tools configured to perform at least one of turning, milling and drilling of the rotor or parts thereof clamped on the work-piece bed (210).

6. The manufacturing system (1000) as claimed in claim 5, wherein the machining processing section (200) further comprises:
one or more supplementary arrangements to support one or more operations on the rotor or parts thereof at the work-piece bed.

7. The manufacturing system (1000) as claimed in claim 1, wherein the blading cum clean-room section (300) comprises one or more areas comprising a washing or deburring area (310), at least one blading area (320, 330), and a clean-room area (340) for performing at least one of washing, deburring and blading of the rotor at respective areas.

8. The manufacturing system (1000) as claimed in claim 1, wherein the blading cum clean-room section further comprises a plurality of supporting areas (350) for supporting at least one of buffering, machining and related operations.

9. The manufacturing system (1000) as claimed in claim 1, wherein the plurality of processing sections further comprises,
a balancing-cum-shipping section (400) configured to receive the rotor or parts thereof from the blading cum clean-room section (300) via the work-piece and power shuttles (710, 720) of the least one transportation-setup station (700) to perform related process including at least one of balancing and shipping of the rotor or parts thereof.

10. A method of manufacturing the rotor or parts thereof according to the manufacturing system (1000) as claimed in any of the preceding claims 1 to 9, the method comprising:
performing a plurality of processing operations on the plurality of processing sections (2000) to process the rotor or parts thereof, processing operation comprising:
performing welding and one or more related processes including at least one of testing, stacking, welding preparation, and welding of the rotor or parts thereof on the welding processing section (100);
performing machining and one or more related processes including at least one of turning, milling and drilling of the rotor or parts thereof on the machining processing section (200); and
performing a plurality of maneuvering operations (3000) to maneuver the rotor or parts thereof between and across the plurality of processing sections (2000), maneuvering operation comprising:
maneuvering the rotor or parts thereof along a portion of the welding processing section (100) by the pallet unit (500) configured in the welding processing section (100);
tilting the orientation of the rotor or parts thereof, received from the pallet unit (500), by the tilting unit (600) configured at the welding processing section (100); and
maneuvering the rotor or parts thereof between and across the plurality of processing sections (2000) via the work-piece and power shuttles (710, 720) of the at least one transportation-setup station (700) for manufacturing of the rotor,
**characterised by** the performing the plurality of processing operations further comprising performing one or more processes, including washing, deburring, blading of the rotor or parts thereof at the blading cum clean-room section (300), wherein the blading cum clean-room section (300) is configured to receive the rotor or parts thereof from the machining processing section (200) via the work-piece shuttle (710).

11. The method as claimed in claim 10, wherein performing welding and related processes at the welding processing section (100) comprises:
performing testing of the rotor or parts thereof for one of more times on the at least one testing station (110);
machining the tested rotor or parts thereof on the lathe machining station (120);
performing the first welding operation on the rotor parts to stack thereto on the first welding station (130), received from the lathe machining station (120) via the work-piece and power shuttles (710, 720), to obtain the rotor in a vertical orientation; wherein the vertical orientation of the rotor part at the first welding station (130) is converted to the horizontal orientation by the pallet and titling units (500, 600); and
performing a second welding operation on the rotor parts at the horizontal orientation of the rotor or parts thereof on the second welding station (140), wherein the rotor or parts thereof is transported in the horizontal orientation by the work-piece and power shuttles (710, 720) from the first welding station (130) to the second welding station (140).

12. The method as claimed in claim 10, wherein performing welding and related processes on the welding processing section (100) further comprises:
performing one or more auxiliary operations, including testing, buffering, cooling, heating on the rotor or parts thereof at the one or more auxiliary stations (150-154), wherein the rotor or parts thereof are transported along the one or more auxiliary stations (150-154) by the pallet unit (500) in the vertical orientation thereof.

13. The method as claimed in claim 12, wherein performing the plurality of maneuvering operations (3000) comprises handling of the rotor or parts thereof to the lathe machining station (120) of the welding processing section (100) by the handling device (800).

14. The method as claimed in claim 10, wherein performing machining and related process comprises:
receiving the rotor or parts thereof from the welding processing section (100) on the work-piece bed (210) at the machining processing section (200) via the power shuttle (720), upon being configured on the work-piece shuttle (710);
clamping a plurality of clamping arrangements (212-218) configured along the work-piece bed (210) to clamp the rotor or parts thereof; and
performing at least one of turning, milling and drilling on the rotor or parts thereof clamped on the work-piece bed (210) by the at least one automatic controlled machine (220) having integrated tools.

15. The method as claimed in claim 10, wherein performing the plurality of processing operations further comprises,
balancing of the rotor or parts thereof at the balancing-cum-shipping section (400), and
shipping of the rotor or parts thereof at the balancing-cum-shipping section (400),
wherein the balancing-cum-shipping section (400) is configured to receive the rotor or parts thereof from the blading cum clean-room section (300) via the work-piece and power shuttles (710,720).

## Patentansprüche

1. Herstellsystem (1000) zur Herstellung eines Rotors, der mehrere Teile desselben aufweist, wobei das Herstellsystem (1000) Folgendes umfasst:
eine Vielzahl von Bearbeitungsabschnitten (2000), die so ausgelegt sind, dass sie den Rotor oder Teile desselben bearbeiten, wobei die Vielzahl von Bearbeitungsabschnitten (2000) Folgendes umfasst:
einen schweißenden Bearbeitungsabschnitt (100), der so ausgelegt ist, dass er einen Schweißvorgang und einen oder mehrere damit zusammenhängende Vorgänge durchführt, die das Prüfen, Stapeln, Schweißvorbereiten und/oder Schweißen des Rotors oder von Teilen desselben umfassen,
einen maschinellen Bearbeitungsabschnitt (200), der so ausgelegt ist, dass er den Rotor oder Teile desselben aufnimmt, um den maschinellen Bearbeitungsvorgang und einen oder mehrere damit zusammenhängende Vorgänge durchzuführen, die das Drehen, Fräsen und/oder Bohren derselben umfassen, und
eine Vielzahl von Bewegungsanordnungen (3000), die so ausgelegt sind, dass sie den Rotor oder Teile desselben zwischen der Vielzahl von Bearbeitungsabschnitten (2000) und über diese hinweg bewegen, wobei die Vielzahl von Bewegungsanordnungen (3000) Folgendes umfasst:
eine Paletteneinheit (500), die so in dem schweißenden Bearbeitungsabschnitt (100) ausgelegt ist, dass sie den Rotor oder Teile desselben entlang einem Teil des schweißenden Bearbeitungsabschnitts (100) bewegt,
eine Schwenkeinheit (600), die so in dem schweißenden Bearbeitungsabschnitt (100) ausgelegt ist, dass sie den Rotor oder Teile desselben bewegt, die von der Paletteneinheit (500) aufgenommen worden sind, um eine Ausrichtung derselben zu verschwenken, und
wenigstens eine Transporteinrichtungsstation (700), um den Rotor oder Teile desselben zu transportieren, wobei die wenigstens eine Transporteinrichtungsstation (700) jeweils Folgendes umfasst:
ein Werkstückshuttle (710), das geeignet ist, den Rotor oder Teile desselben aufzunehmen, und
ein Leistungsshuttle (720), das mit dem Werkstückshuttle (710) wirkverbunden ist, um das Werkstückshuttle (710) zum Transport des Rotors oder von Teilen desselben zwischen der Vielzahl von Bearbeitungsabschnitten (2000) und über diese hinweg zu bewegen und so den Rotor herzustellen,
**dadurch gekennzeichnet, dass**
die Vielzahl von Bearbeitungsabschnitten (2000) ferner einen Beschaufelungs- und Reinraum-Abschnitt (300) umfasst, der so ausgelegt ist, dass er den Rotor oder Teile desselben von dem maschinellen Bearbeitungsabschnitt (200) über das Werkstückshuttle (710) der wenigstens einen Transporteinrichtungsstation (700) aufnimmt, um einen oder mehrere damit zusammenhängende Vorgänge durchzuführen, die das Waschen, Entgraten und Beschaufeln des Rotors oder von Teilen desselben umfassen.

2. Herstellsystem (1000) nach Anspruch 1, wobei der schweißende Bearbeitungsabschnitt (100) Folgendes umfasst:
wenigstens eine Prüfstation (110), die so ausgelegt ist, dass sie das einmalige oder mehrmalige Prüfen des Rotors oder von Teilen desselben durchführt,
eine Drehbearbeitungsstation (120), die so ausgelegt ist, dass sie den geprüften Rotor oder die geprüften Teile desselben maschinell bearbeitet,
eine erste Schweißstation (130), um die über das Werkstückshuttle und Leistungsshuttle (710, 720) von der Drehbearbeitungsstation (120) aufgenommenen Rotorteile zu stapeln und einen ersten Schweißvorgang an denselben durchzuführen, um den Rotor in einer vertikalen Ausrichtung zu erhalten, wobei die vertikale Ausrichtung des Rotorteils an der ersten Schweißstation (130) durch die Paletteneinheit und Schwenkeinheit (500, 600) in die horizontale Ausrichtung umgewandelt wird, und
eine zweite Schweißstation (140), die so ausgelegt ist, dass sie einen zweiten Schweißvorgang an den Rotorteilen durchführt, und zwar in der horizontalen Ausrichtung des über das Werkstückshuttle und Leistungsshuttle (710, 720) von der ersten Schweißstation (130) her transportierten Rotorteils.

3. Herstellsystem (1000) nach Anspruch 2, wobei der schweißende Bearbeitungsabschnitt (100) ferner Folgendes umfasst:
eine oder mehrere Hilfsstationen (150-154), um einen oder mehrere Hilfsvorgänge an dem Rotor oder Teilen desselben durchzuführen, wobei es sich bei der einen oder den mehreren Hilfsstationen (150-154) um eine Röntgenprüfstation (150), eine Pufferstation (152), eine Kühlstation (154) und/oder eine Ofenstation (155) zur Durchführung entsprechender Vorgänge an dem Rotor oder Teilen desselben handelt, wobei der Rotor oder Teile desselben durch die Paletteneinheit (500) in der vertikalen Ausrichtung derselben entlang der einen oder den mehreren Hilfsstationen (150-154) transportiert werden.

4. Herstellsystem (1000) nach Anspruch 2, wobei die Vielzahl von Bewegungsanordnungen (3000) eine Beförderungsvorrichtung (800) zum Befördern des Rotors oder von Teilen desselben zu der Drehbearbeitungsstation (120) an dem schweißenden Bearbeitungsabschnitt (100) umfasst.

5. Herstellsystem (1000) nach Anspruch 1, wobei der maschinelle Bearbeitungsabschnitt (200) Folgendes umfasst:
ein Werkstückbett (210), das so ausgelegt ist, dass es den Rotor oder Teile desselben von dem schweißenden Bearbeitungsabschnitt (100) über das Leistungsshuttle (720) bei Anordnung auf dem Werkstückshuttle (710) an der wenigstens einen Transporteinrichtungsstation (700) aufnimmt,
eine Vielzahl von Einspannanordnungen (212-218), die entlang dem Werkstückbett angeordnet sind, um den Rotor oder Teile desselben einzuspannen, und
wenigstens eine automatisch gesteuerte Maschine (220), die integrierte Werkzeuge aufweist und so ausgelegt ist, dass sie das Drehen, Fräsen und/oder Bohren des Rotors oder von Teilen desselben, die auf dem Werkstückbett (210)eingespannt sind, durchführt.

6. Herstellsystem (1000) nach Anspruch 5, wobei der maschinelle Bearbeitungsabschnitt (200) ferner Folgendes umfasst:
eine oder mehrere ergänzende Anordnungen, um einen oder mehrere Vorgänge an dem Rotor oder Teilen desselben an dem Werkstückbett zu unterstützen.

7. Herstellsystem (1000) nach Anspruch 1, wobei der Beschaufelungs- und Reinraum-Abschnitt (300) einen oder mehrere Bereiche umfasst, die einen Wasch- oder Entgratungsbereich (310), wenigstens einen Beschaufelungsbereich (320, 330) und einen Reinraumbereich (340) zur Durchführung des Waschens, Entgratens und/oder Beschaufelns des Rotors in den jeweiligen Bereichen umfassen.

8. Herstellsystem (1000) nach Anspruch 1, wobei der Beschaufelungs- und Reinraum-Abschnitt ferner eine Vielzahl von Unterstützungsbereichen (350) zum Unterstützen des Pufferns, maschinellen Bearbeitens und/oder damit zusammenhängender Vorgänge umfasst.

9. Herstellsystem (1000) nach Anspruch 1, wobei die Vielzahl von Bearbeitungsabschnitten ferner Folgendes umfasst:
einen Auswuchtungs- und Verfrachtungsabschnitt (400), der so ausgelegt ist, dass er den Rotor oder Teile desselben von dem Beschaufelungs- und Reinraum-Abschnitt (300) über das Werkstückshuttle und Leistungsshuttle (710, 720) der wenigstens einen Transporteinrichtungsstation (700) aufnimmt, um einen damit zusammenhängenden Vorgang durchzuführen, der das Auswuchten und/oder Verfrachten des Rotors oder von Teilen desselben umfasst.

10. Verfahren zur Herstellung des Rotors oder von Teilen desselben nach dem Herstellsystem (1000) nach einem der vorhergehenden Ansprüche 1 bis 9, wobei das Verfahren Folgendes umfasst:
Durchführen einer Vielzahl von bearbeitenden Vorgängen an der Vielzahl von Bearbeitungsabschnitten (2000), um den Rotor oder Teile desselben zu bearbeiten, wobei der bearbeitende Vorgang Folgendes umfasst:
Durchführen eines Schweißvorgangs und eines oder mehrerer damit zusammenhängender Vorgänge, die das Prüfen, Stapeln, Schweißvorbereiten und/oder Schweißen des Rotors oder von Teilen desselben an dem schweißenden Bearbeitungsabschnitt (100) umfassen,
Durchführen eines maschinellen Bearbeitungsvorgangs und eines oder mehrerer damit zusammenhängender Vorgänge, die das Drehen, Fräsen und/oder Bohren des Rotors oder von Teilen desselben an der maschinellen Bearbeitungsstation (200) umfassen, und
Durchführen einer Vielzahl von Bewegungsvorgängen (3000), um den Rotor oder Teile desselben zwischen der Vielzahl von Bearbeitungsabschnitten (2000) und über diese hinweg zu bewegen, wobei der Bewegungsvorgang Folgendes umfasst:
Bewegen des Rotors oder von Teilen desselben entlang einem Teil des schweißenden Bearbeitungsabschnitts (100) durch die in dem schweißenden Bearbeitungsabschnitt (100) angeordnete Paletteneinheit (500),
Verschwenken der Ausrichtung des Rotors oder von Teilen desselben, die von der Paletteneinheit (500) aufgenommen worden sind, durch die in dem schweißenden Bearbeitungsabschnitt (100) angeordnete Schwenkeinheit (600), und
Bewegen des Rotors oder von Teilen desselben zwischen der Vielzahl von Bearbeitungsabschnitten (2000) und über diese hinweg über das Werkstückshuttle und Leistungsshuttle (710, 720) der wenigstens einen Transporteinrichtungsstation (700) für die Herstellung des Rotors,
**dadurch gekennzeichnet, dass** das Durchführen der Vielzahl von Bearbeitungsvorgängen ferner das Durchführen eines oder mehrerer Vorgänge umfasst, die das Waschen, Entgraten, Beschaufeln des Rotors oder von Teilen desselben an dem Beschaufelungs- und Reinraum-Abschnitt (300) umfassen, wobei der Beschaufelungs- und Reinraum-Abschnitt (300) so ausgelegt ist, dass er den Rotor oder Teile desselben von dem maschinellen Bearbeitungsabschnitt (200) über das Werkstückshuttle (710) aufnimmt.

11. Verfahren nach Anspruch 10, wobei das Durchführen des Schweißvorgangs und damit zusammenhängender Vorgänge an dem schweißenden Bearbeitungsabschnitt (100) Folgendes umfasst:
Durchführen der einmaligen oder mehrmaligen Prüfung des Rotors oder von Teilen desselben an der wenigstens einen Prüfstation (110),
maschinelles Bearbeiten des geprüften Rotors oder der geprüften Teile desselben an der Drehbearbeitungsstation (120),
Durchführen des ersten Schweißvorgangs an den über das Werkstückshuttle und das Leistungsshuttle (710, 720) von der Drehbearbeitungsstation (120) aufgenommenen Rotorteilen, um diese an der ersten Schweißstation (130) zu stapeln, um den Rotor in einer vertikalen Ausrichtung zu erhalten, wobei die vertikale Ausrichtung des Rotorteils an der ersten Schweißstation (130) durch die Paletteneinheit und Schwenkeinheit (500, 600) in die horizontale Ausrichtung umgewandelt wird, und
Durchführen eines zweiten Schweißvorgangs an den Rotorteilen in der horizontalen Ausrichtung des Rotors oder der Teile desselben an der zweiten Schweißstation (140), wobei der Rotor oder Teile desselben in der horizontalen Ausrichtung durch das Werkstückshuttle und Leistungsshuttle (710, 720) von der ersten Schweißstation (130) zu der zweiten Schweißstation (140) transportiert werden.

12. Verfahren nach Anspruch 10, wobei das Durchführen des Schweißvorgangs und damit zusammenhängender Vorgänge an dem schweißenden Bearbeitungsabschnitt (100) ferner Folgendes umfasst:
Durchführen eines oder mehrerer Hilfsvorgänge, die das Prüfen, Puffern, Kühlen, Erwärmen des Rotors oder von Teilen desselben an der einen oder den mehreren Hilfsstationen (150-154) umfassen, wobei der Rotor oder Teile desselben von der Paletteneinheit (500) in der vertikalen Ausrichtung derselben entlang der einen oder den mehreren Hilfsstationen (150-154) transportiert werden.

13. Verfahren nach Anspruch 12, wobei das Durchführen der Vielzahl von Bewegungsvorgängen (3000) das Befördern des Rotors oder von Teilen desselben zu der Drehbearbeitungsstation (120) des schweißenden Bearbeitungsabschnitts (100) durch die Beförderungsvorrichtung (800) umfasst.

14. Verfahren nach Anspruch 10, wobei das Durchführen des maschinellen Bearbeitungsvorgangs und damit zusammenhängenden Vorgangs Folgendes umfasst:
Aufnehmen des Rotors oder von Teilen desselben von dem schweißenden Bearbeitungsabschnitt (100) an dem Werkstückbett (210) an dem maschinellen Bearbeitungsabschnitt (200) über das Leistungsshuttle (720) bei Anordnung auf dem Werkstückshuttle (710),
Einspannen einer Vielzahl von Einspannanordnungen (212-218), die entlang dem Werkstückbett (210) angeordnet sind, um den Rotor oder Teile desselben einzuspannen, und
Durchführen des Drehens, Fräsens und/oder Bohrens an dem Rotor oder Teilen desselben, die auf dem Werkstückbett (210) eingespannt sind, durch die wenigstens eine automatisch gesteuerte Maschine (220), die integrierte Werkzeuge aufweist.

15. Verfahren nach Anspruch 10, wobei das Durchführen der Vielzahl von Bearbeitungsvorgängen ferner Folgendes umfasst:
Auswuchten des Rotors oder von Teilen desselben an dem Auswuchtungs- und Verfrachtungsabschnitt (400) und
Verfrachten des Rotors oder von Teilen desselben an dem Auswuchtungs- und Verfrachtungsabschnitt (400), wobei der Auswuchtungs- und Verfrachtungsabschnitt (400) so ausgelegt ist, dass er den Rotor oder Teile desselben von dem Beschaufelungs- und Reinraum-Abschnitt (300) über das Werkstückshuttle und Leistungsshuttle (710, 720) aufnimmt.

## Revendications

1. Système de fabrication (1000) permettant de fabriquer un rotor, constitué de diverses pièces, le système de fabrication 1000 comprenant :
une pluralité de sections de traitement (2000), conçues pour traiter le rotor ou des pièces correspondantes, la pluralité de sections de traitement(2000) comprenant :
une section de traitement par soudage(100), conçue pour réaliser un soudage et un ou plusieurs procédés apparentés comprenant un test, un empilement, une préparation au soudage et/ou un soudage du rotor ou des pièces correspondantes ;
une section de traitement par usinage(200), conçue pour recevoir le rotor ou des pièces correspondantes pour réaliser un usinage et un ou plusieurs procédés apparentés comprenant un tournage, un fraisage et/ou un perçage correspondants ; et
une pluralité d'aménagements de manoeuvre (3000), conçues pour manoeuvrer le rotor ou des pièces correspondantes entre et sur la pluralité de sections de traitement (2000), la pluralité d'aménagements de manoeuvre (3000) comprenant :
une unité de palettisation (500), configurée dans la section de traitement par soudage (100) pour manoeuvrer le rotor ou des pièces correspondantes le long d'une partie de la section de traitement par soudage (100);
une unité de basculement (600), configurée dans la section de traitement par soudage (100) pour manoeuvrer le rotor ou des pièces correspondantes, reçue de l'unité de palettisation (500), pour en faire basculer une orientation ; et
au moins un poste de configuration de transport (700), permettant de transporter le rotor ou des pièces correspondantes, le ou les postes de configuration de transport (700) comprenant chacun :
une navette de pièce à exécuter (710), conçue pour recevoir le rotor ou des pièces correspondantes ; et
une navette électrique (720), accouplée de manière fonctionnelle à la navette de pièce à exécuter (710) pour manoeuvrer la navette de pièce à exécuter (710) afin de transporter le rotor ou des pièces correspondantes entre et sur la pluralité de sections de traitement (2000) afin de fabriquer le rotor, ledit système étant **caractérisé en ce que** :
la pluralité de sections de traitement (2000) comprend en outre une section de salle blanche et d'aubage (300), conçue pour recevoir le rotor ou des pièces correspondantes en provenance de la section de traitement par usinage (200) par l'intermédiaire de la navette de pièce à exécuter (710) de l'au moins un poste de configuration de transport (700) afin de réaliser un ou plusieurs procédés apparentés comprenant un lavage, un ébavurage et un aubage du rotor ou des pièces correspondantes.

2. Système de fabrication (1000) selon la revendication 1, dans lequel la section de traitement par soudage (100) comprend :
au moins un poste de test (110), conçu pour réaliser un test du rotor ou des pièces correspondantes une ou plusieurs fois ;
un poste de tournage (120), conçu pour usiner le rotor testé ou les pièces correspondantes testées ;
un premier poste de soudage (130) pour empiler et réaliser une première opération de soudage sur les pièces de rotor, reçues en provenance du poste de tournage 120 par l'intermédiaire des navettes de pièce à exécuter et électrique (710, 720), afin d'obtenir le rotor dans une orientation verticale ; l'orientation verticale de la pièce de rotor au niveau du premier poste de soudage (130) étant convertie en orientation horizontale par les unités palettisation et de basculement (500, 600); et
un second poste de soudage (140), conçu pour réaliser une seconde opération de soudage sur les pièces de rotor dans l'orientation horizontale de la pièce de rotor transportée par les navettes de pièce à exécuter et électrique (710, 720) en provenance du premier poste de soudage (130).

3. Système de fabrication (1000) selon la revendication 2, dans lequel la section de traitement par soudage (100) comprend en outre :
un ou plusieurs postes auxiliaires (150-154), permettant de réaliser une ou plusieurs opérations auxiliaires sur le rotor ou des pièces correspondantes, le ou les postes auxiliaires (150-154) étant un poste de test par rayons X (150), un poste de rétention (152), un poste de refroidissement (154) et/ou un poste four (155), permettant de réaliser des opérations respectives sur le rotor ou des pièces correspondantes, le rotor ou les pièces correspondantes étant transportés le long du ou des postes auxiliaires (150-154) par l'unité de palettisation (500) dans leur orientation verticale.

4. Système de fabrication (1000) selon la revendication 2, dans lequel la pluralité d'aménagements de manoeuvre (3000) comprend un dispositif de manutention (800) permettant de manutentionner le rotor ou des pièces correspondantes vers le poste de tournage (120) au niveau de la section de traitement par soudage (100).

5. Système de fabrication (1000) selon la revendication 1, dans lequel la section de traitement par usinage (200) comprend :
un banc de pièce à exécuter (210), conçu pour recevoir le rotor ou des pièces correspondantes en provenance de la section de traitement par soudage (100) par l'intermédiaire de la navette électrique (720) lors de leur configuration sur la navette de pièce à exécuter (710) au niveau de l'au moins un poste de configuration de transport (700);
une pluralité d'aménagements de serrage (212-218) conçus le long du banc de pièce à exécuter pour serrer le rotor ou des pièces correspondantes ; et
au moins une machine commandée automatiquement (220) ayant des outils intégrés conçus pour réaliser un tournage, un fraisage et/ou un perçage du rotor ou des pièces correspondantes serrés sur le banc de pièce à exécuter (210).

6. Système de fabrication (1000) selon la revendication 5, dans lequel la section de traitement par usinage (200) comprend en outre :
un ou plusieurs aménagements supplémentaires permettant de réaliser une ou plusieurs opérations sur le rotor ou des pièces correspondantes au niveau du banc de pièce à exécuter.

7. Système de fabrication (1000) selon la revendication 1, dans lequel la section de salle blanche et d'aubage (300) comprend une ou plusieurs zones comprenant une zone de lavage ou d'ébavurage (310), au moins une zone d'aubage (320, 330), et une zone de salle blanche (340) permettant de réaliser un lavage, un ébavurage et/ou un aubage du rotor au niveau de zones respectives.

8. Système de fabrication (1000) selon la revendication 1, dans lequel la section de salle blanche et d'aubage comprend en outre une pluralité de zones de réalisation (350) permettant de réaliser une opération de rétention, une opération d'usinage et/ou une opération apparentée.

9. Système de fabrication (1000) selon la revendication 1, dans lequel la pluralité de sections de traitement comprend en outre :
une section d'expédition et d'équilibrage (400), conçue pour recevoir le rotor ou des pièces correspondantes en provenance de la section de salle blanche et d'aubage (300) par l'intermédiaire des navettes de pièce à exécuter et électrique (710, 720) de l'au moins un poste de configuration de transport (700) afin de réaliser un procédé apparenté comprenant l'équilibrage et/ou l'expédition du rotor ou des pièces correspondantes.

10. Procédé de fabrication du rotor ou des pièces correspondantes selon le système de fabrication (1000) selon l'une quelconque des revendications des revendications précédentes 1 à 9, le procédé consistant à :
réaliser une pluralité d'opérations de traitement sur la pluralité de sections de traitement (2000) afin de traiter le rotor ou des pièces correspondantes, les opérations de traitement consistant à :
réaliser un soudage et un ou plusieurs procédés apparentés comprenant un test, un empilement, une préparation au soudage et/ou un soudage du rotor ou des pièces correspondantes sur la section de traitement par soudage (100);
réaliser un usinage et un ou plusieurs procédés apparentés comprenant un tournage, un fraisage et/ou un perçage du rotor ou des pièces correspondantes sur la section de traitement par usinage (200); et
réaliser une pluralité d'opérations de manoeuvre (3000) pour manoeuvrer le rotor ou des pièces correspondantes entre et sur la pluralité de sections de traitement (2000), les opérations de manoeuvre consistant à :
manoeuvrer le rotor ou des pièces correspondantes le long d'une partie de la section de traitement par soudage (100) par l'unité de palettisation (500), configurée dans la section de traitement par soudage (100);
basculer l'orientation du rotor ou des pièces correspondantes, reçues en provenance de l'unité de palettisation (500), par l'unité de basculement (600) configurée au niveau de la section de traitement par soudage (100); et
manoeuvrer le rotor ou des pièces correspondantes entre et sur la pluralité de sections de traitement (2000) par l'intermédiaire des navettes de pièce à exécuter et électrique (710, 720) l'au moins un poste de configuration de transport (700) pour fabriquer le rotor,
ledit procédé étant **caractérisé par** la réalisation de la pluralité d'opérations consistant en outre à réaliser un ou plusieurs procédés, comprenant un lavage, un ébavurage et un aubage du rotor ou des pièces correspondantes au niveau de la section de salle blanche et d'aubage (300), la section de salle blanche et d'aubage (300) étant conçue pour recevoir les rotors ou des pièces correspondantes en provenance de la section de traitement par usinage (200) par l'intermédiaire de la navette de pièce à exécuter (710).

11. Procédé selon la revendication 10, dans lequel la réalisation des procédés de soudage et apparentés au niveau de la section de traitement par soudage (100) consiste à :
réaliser le test du rotor ou des pièces correspondantes une ou plusieurs fois sur l'au moins poste de test (110);
usiner le rotor testé ou les pièces correspondantes testées sur le poste de tournage (120);
réaliser la première opération de soudage sur les pièces de rotor pour les empiler sur le premier poste de soudage (130), reçues en provenance du poste de tournage (120) par l'intermédiaire des navettes de pièce à exécuter et électrique (710, 720), afin d'obtenir le rotor dans une orientation verticale ; l'orientation verticale de la pièce de rotor au niveau du premier poste de soudage (130) étant convertie en orientation horizontale par les unités palettisation et de basculement (500, 600); et
réaliser une seconde opération de soudage sur les pièces de rotor dans l'orientation horizontale du rotor ou des pièces correspondantes sur le second poste de soudage (140), le rotor ou des pièces correspondantes étant transportés dans l'orientation horizontale par les navettes de pièce à exécuter et électrique (710, 720) en provenance du premier poste de soudage (130) vers le second poste de soudage (140).

12. Procédé selon la revendication 10, dans lequel la réalisation des procédés de soudage et apparentés sur la section de traitement par soudage (100) consiste en outre à :
réaliser une ou plusieurs opérations auxiliaires, comprenant un test, une rétention, un refroidissement, un chauffage sur le rotor ou des pièces correspondantes au niveau du ou des postes auxiliaires (150-154), le rotor ou les pièces correspondantes étant transportés le long du ou des postes auxiliaires (150-154) par l'unité de palettisation (500) dans leur orientation verticale.

13. Procédé selon la revendication 12, dans lequel la réalisation de la pluralité d'opérations de manoeuvre (3000) consiste à manutentionner le rotor ou des pièces correspondantes vers le poste de tournage (120) de la section de traitement par soudage (100) par le dispositif de manutention (800).

14. Procédé selon la revendication 10, dans lequel la réalisation de l'usinage et du procédé apparenté consiste à :
recevoir le rotor ou des pièces correspondantes en provenance de la section de traitement par soudage (100) sur le banc de pièce à exécuter (210) au niveau de la section de traitement par usinage (200) par l'intermédiaire de la navette électrique (720), lors de leur configuration sur la navette de pièce à exécuter (710) ;
serrer une pluralité d'aménagements de serrage (212-218) conçus le long du banc de pièce à exécuter (210) pour serrer le rotor ou des pièces correspondantes ; et
réaliser un tournage, un fraisage et/ou un perçage sur le rotor ou des pièces correspondantes serrés sur le banc de pièce à exécuter (210) par l'au moins une machine commandée automatiquement (220) ayant des outils intégrés.

15. Procédé selon la revendication 10, dans lequel la réalisation de la pluralité d'opérations de traitement consiste en outre à :
équilibrer le rotor ou des pièces correspondantes au niveau de la section d'expédition et d'équilibrage (400); et
expédier le rotor ou des pièces correspondantes au niveau de la section d'expédition et d'équilibrage (400), la section d'expédition et d'équilibrage (400) étant conçue pour recevoir le rotor ou des pièces correspondantes en provenance de la section de salle blanche et d'aubage (300) par l'intermédiaire des navettes de pièce à exécuter et électrique (710, 720).
